# EUROPEAN PATENT SPECIFICATION

(11) **EP 3 962 771 B1**
(45) Date of publication and mention of the grant of the patent: **19.08.2026**
(21) Application number: 20722341.3
(22) Date of filing: 04.05.2020
(51) Int. Cl.: B60L 53/36

(54) **SYSTEM AND METHOD FOR POSITIONING A MOBILE ASSEMBLY**
SYSTEM UND VERFAHREN ZUR POSITIONIERUNG EINER MOBILEN BAUGRUPPE
SYSTÈME ET PROCÉDÉ DE POSITIONNEMENT D'UN ENSEMBLE MOBILE

(30) Priority: 03.05.2019 NL 2023068
(43) Date of publication of application: 09.03.2022
(73) Proprietor: Prodrive Technologies Innovation Services B.V., 5692 EM Son en Breugel (NL)
(72) Inventor: MEESSEN, Koen Joseph, 5692 EM Son (NL)
(74) Representative: Arnold & Siedsma
(86) International application number: PCT/EP2020/062351
(87) International publication number: WO 2020/225226

(56) References cited:
- EP-A2- 2 050 640
- WO-A1-2014/001067
- WO-A1-2019/015759
- DE-A1- 102017 216 127
- US-A1- 2007 010 940
- US-A1- 2018 374 359

## Description

### Technical field

The present invention is related to a system and a method for positioning of a stationary assembly and a mobile assembly relative to each other. A possible application is the positioning of an electric vehicle, an automated guided vehicle, an autonomous vehicle, or a drone. Systems and methods of the present invention are particularly useful in relation to positioning a vehicle for conductive and/or wireless power transfer.

### Background art

For automated charging of vehicles (referred to as mobile assembly), the vehicle has to park at a position within a predefined charging range of the conductive or wireless charging device (referred to as stationary assembly). This charging range is typically smaller than 500 by 500 mm. To help the driver or the autonomous vehicle to reach this position, the charging system typically includes a positioning system with a range up to a few meters (i.e. 0.5 m - 10 m), which estimates the position of the charging area with respect to the vehicle or vice versa.

The positioning system typically comprises transmitters and receivers that are either integrated in the mobile assembly, the stationary assembly, or in both assemblies. Based on the transmitted and received signals the relative and/or absolute position with respect to each other can be determined.

Often the environment around the stationary assembly can distort the signals used by the positioning system. For example, when a positioning system is used based on magnetic fields, magnetic or electric conducting materials in the vicinity can dampen or reflect the magnetic fields. In case of a system based on ultra-sound, reflection of sound from nearby objects can distort the received signals. As a result, the positioning system, calibrated in a laboratory environment, provides position information that deviates from the real position in the installed environment.

Next to the generally applied positioning system there is often other trajectory information present on the mobile assembly, such as wheel rotation, cameras for autonomous driving, etc.

It is known from WO 2014/183926, 20 November 2014 to align a vehicle to a stationary power transfer unit by supplying this additional trajectory information that is gathered by vehicle borne sensors, such as rotational speed sensors, accelerometers, gyroscopes, etc. as redundant information to the park assistance control unit while executing the trajectory of the vehicle towards the stationary unit. The park assistance control unit can then correct its trajectory based on the redundant information. While this method allows for obtaining higher positioning accuracy for the instant trajectory, the calculation of a subsequent trajectory in a subsequent parking manoeuvre will not be improved.

US 2007/010940 discloses a system for location and inventory tracking, comprising one or more sensors for obtaining real-time position information as well as a processor configured to estimate trajectories and correcting location errors. Calibrated position locations are iteratively determined to provide calibrated second trajectory segments in a real-time fashion. The calibrated second trajectories are then used to identify the errors in the past real-time position data.

### Summary of the invention

The present invention aims at solving at least one and preferably all disadvantages of systems known in the art. This may be achieved by combining this additional trajectory information from the mobile assembly to improve (a posteriori) the positioning estimation of the mobile assembly with respect to the stationary assembly each time a positioning sequence is carried out.

It is therefore an aim of the invention to provide a positioning system and method that is more accurate and/or efficient in determining positioning information for guidance of a mobile assembly towards a stationary assembly.

According to the invention, the distortion of the position information by the environment is not removed. Rather, the (fixed) environmental distortion is taken into account by compensating the calculated position over time, e.g. iteratively. This can be done by using learning techniques such as machine learning.

The distortion compensation is improved by combining the calculated trajectory from the positioning system, referred to as first positioning system, with measurement data originated from one or more second sensors on the mobile assembly different from the first positioning system. These one or more second sensors are advantageously not used by the first positioning system in calculating the trajectory. These one or more second sensors are advantageously complementary to the sensors of the positioning system, and the second sensors are exploited to form a second positioning system that is used to calibrate and/or adapt the trajectory determined by the first positioning system. Advantageously, from the data of the one or more second sensors a second trajectory of the mobile assembly relative to the stationary assembly is determined. The combination of the measured signals of both positioning systems is used for improvement of the position estimation of the first positioning system, with the intention to learn and/or calibrate the environment of the first positioning system. As an additional advantage, after some iterations, it becomes possible to obtain absolute position data from measurements of the first positioning system when adjusted by a calibration offset obtained through multiple second trajectories determined by the so-called second positioning system.

According to a first aspect of the invention, there is therefore provided a system for positioning a mobile assembly relative to a stationary assembly, as set out in the appended claims.

Systems for positioning a mobile assembly relative to a stationary assembly according to the invention comprise a first position sensing device, a controller, and at least one sensor attached to the mobile assembly. The first position sensing device is configured for sensing first data representative of a relative position between the mobile assembly and the stationary assembly based on a wireless signal, which can be an electromagnetic signal (e.g. radio waves, a magnetic field, or optical signal), an ultrasound or acoustic signal, or any other suitable signal. The controller may be configured to determine the relative position or a first trajectory from a first position remote from the stationary assembly to a second position proximate to the stationary assembly based on such first data. The at least one sensor is arranged for collecting second data representative of a displacement executed by a mobile assembly. The controller is further configured for determining a calibration offset for the first trajectory based on the second data. Such calibration offset may comprise environmental distortion data (e.g. a map) configured for improving the first trajectory, such as (relative) position offset data. The calibration offset is determined following completion of the displacement of the mobile assembly from the first position (101) remote from the stationary assembly to the second position (102) proximate to the stationary assembly along the first trajectory (103). The controller may further be configured for iteratively improving the calibration offset following completion of subsequent displacements of the mobile assembly from a third to a fourth position, which fourth position preferably coincides with the second position. Optionally the controller is further configured for compensating the first trajectory based on the calibration offset.

Embodiments of such systems may further be configured for guiding the displacement of the mobile assembly from the first position to the second position, e.g. based on the compensated first trajectory. For such embodiments the controller may be configured for determining a first trajectory for guiding the mobile assembly from the first position to the second position. In such embodiment the first trajectory or the compensated first trajectory is determined before executing a displacement of the mobile assembly towards the stationary assembly. The controller typically requires information regarding the estimated relative position between the mobile and the stationary assembly and thus may be configured to determine the compensated first trajectory based on the first data and the calibration offset. The controller may further be configured to determine the first trajectory based on additional data, such as the orientation of the mobile assembly relative to the stationary assembly and/or the minimal turning radius of a mobile assembly. Such embodiments of the system may also facilitate autonomously moving the mobile assembly along the first trajectory.

In an alternative embodiment, the controller may be configured for guiding the mobile assembly from the first position to the second position based on the relative position, which may be determined based on the first data and for instance a calibration offset (e.g. the compensated first trajectory). The controller may further be configured for determining a first trajectory based on the first data. In such embodiments only the relative position is used for guiding the mobile assembly, for instance by visualizing the relative position of the stationary assembly on a display to an operator operating the mobile assembly. The mobile assembly is then displaced towards the stationary assembly for instance by the operator. Subsequently, the first trajectory is determined by the controller for instance by recording the first data during or after the displacement.

Such first data of a wireless signal may for instance comprise a parameter of the wireless signal, such as latency of receiving a wireless signal (e.g. a time of arrival of a wireless signal, a time difference of a time of arrival of wireless signals for instance originating from or arriving at multiple sensors), a signal strength, an amplitude of a signal, a phase of a signal or combinations of these. The controller may be configured to use one or more methods (e.g. multilateration, triangulation) to determine a relative position based on such first data. Some types of wireless signals may be influenced by environmental factors (e.g. temperature, pressure). Therefore, the system may comprise additional sensors for determining these environmental factors, which provide additional data to the controller for improving determining a relative position based on the first data.

Different methods may be used to determine a relative position based on the wireless signal. In general, the controller determines a relative position using a calculated position of one or more sources relative to the position of one or more sensors. In case of an ultrasound based signal, the system may be realized by providing a mobile assembly and a stationary assembly comprising one or more ultrasound transducers, wherein one of the assemblies may comprise a transducer (e.g. transmitter) transmitting an ultrasound signal and the other one of the assemblies may comprise a transducer (e.g. sensor) for receiving an ultrasound signal. Such a wireless signal has a known (or approximately known) travel speed through air. The controller may be configured to determine the time of arrival of the ultrasound signal at one or more sensors and apply multilateration to calculate the position of the transmitter(s) relative to the sensor(s). Alternatively, to eliminate the need of synchronization between transmitter and sensor, the controller may be configured to determine the time difference of arrival per sensor pair and apply multilateration to calculate the position of the transmitter(s) relative to the sensor(s). Either way, the first position sensing device may comprise additional sensors such as temperature or pressure sensors, which may provide such information regarding the environment to the controller for an improved determination of the relative position, because the speed of sound can be determined more accurately. In situations where the beam pattern of the sensor and transmitter are uniform, the relative signal strength may also be used as first data.

In embodiments where the wireless signal comprises a radio wave a similar method or controller as for ultrasound signals may be used to determine the relative position. For example, for Ultra Wide Band the first data may typically comprise a time of arrival or a time difference of arrival as first data and the controller may be configured for determining a relative position based on multilateration. Alternatively, for Wifi or Bluetooth wireless signals typically the first data will comprise a signal strength and the controller may be configured for determining a relative position based on multilateration using the first data.

Embodiments wherein the wireless signal comprises a magnetic field will typically use low frequent magnetic field (up to 150kHz) signals. The mobile or the stationary assembly may be configured as a transmitter with one or more coils that may be oriented orthogonal to one another. The other assembly may comprise sensors for sensing the magnetic field. Typically different sensors may be used for different axes (x,y,z). These sensors may comprise simple coils (e.g. configured to measure an induced voltage), Hall effect sensors or magneto-resistance sensors to measure the magnetic field. The relative position can be determined in various ways. For example, the first data may comprise a relative signal strength and the controller may be configured for determining a relative position based on multilateration or an inverse magnetic model using the first data. The latter may be based on a theoretical Biot Savart model which expresses the magnetic field originating from a current carrying wire as a function of position in a 3D space. By inversing this model, the measured magnetic field is the input and the position in 3D space is the output. The first data may additionally comprise a phase of the wireless signal and the controller may be configured for using this additional first data in the same inverse magnetic model. Alternatively, the first data comprises a phase of the wireless signal and the controller may be configured for determining a relative position based on triangulation using the first data.

The at least one second sensor is arranged for collecting second data representative of a displacement executed by the mobile assembly and can be any sensor useful to this end. By way of example, the at least one sensor is one or more of: an accelerometer, a gyroscope, a rotation angle encoder, a rotational speed sensor and a steering angle sensor, i.e. sensors that are typically present on mobile assemblies such as vehicles and the like. The at least one second sensor advantageously does not form part of the position sensing device, and the data obtained therefrom (the second data) is advantageously not used in determining the first trajectory. The second data is therefore distinct from the first data.

According to the invention, the controller is further configured for determining a calibration offset for the first trajectory based on the second data. The controller is configured for determining the calibration offset for the entire first trajectory between the first position and the second position. Advantageously, the calibration offset is determined following completion of the displacement of the mobile assembly in execution of the first trajectory from the first position to the second position, e.g. when the mobile assembly has reached or arrived at the stationary assembly and/or in the second position. By determining the calibration offset only when the mobile assembly has arrived at a final destination, it is possible to take the entire trajectory between the first position and the second position into account when compensating distortion of the first trajectory. This is not possible when a piecewise calibration of the trajectory is performed, e.g. between each two consecutive intermediate positions along the first trajectory. An improved distortion compensation is hence obtained, which may provide faster convergence.

The calibration offset comprises environmental distortion data, such as (relative) position offset data, forming a map. This map for instance comprises information regarding distortions of the first data at various locations within an area of the environment. Such calibration offset is derived from the difference between the first trajectory and the second. After multiple displacements from a first position to a second position the calibration offset comprises information regarding multiple approaches (e.g. distance, orientation) of the mobile assembly towards the stationary assembly. The map is thus updated iteratively, preferably for every approach, and can be implemented as a multi-dimensional lookup table for instance if data for translations and rotations of the mobile assembly are stored as a as a function of the first trajectory. In subsequent approaches the distortion data from this map is used to adjust/improve the first trajectory for instance based on an improved position estimation from the first data. In situations where the first trajectory is new in sense that no distortion data is present in the map for the estimated positions, interpolation of the calibration data may be used to obtain derived distortion data for the estimated positions. Subsequent displacements may improve the calibration offset either by increasing the number of estimated positions for which distortion data is collected or by updating the distortion data for estimated positions already present in the map.

Advantageously, the controller is configured for determining a second trajectory representative of the displacement that was executed by the mobile assembly, i.e. from the first position to the second position. Advantageously, the first data is not used for determining the second trajectory. The second trajectory is determined advantageously exclusively based on the second data. The controller is further configured for determining the calibration offset based on a difference between the first trajectory and the second trajectory.

In order to determine the calibration offset, the controller is advantageously configured to let the first trajectory and the second trajectory coincide in a mark position, which can be, though need not be, the second position. The mark position is advantageously a position determined by a third sensor configured to collect third data representative of the mark position. The third sensor is advantageously different from the first position sensor. As a result, the mark position will be a position comprised both in the first trajectory and the second trajectory. The second trajectory is advantageously constructed by using the mark position as common or coinciding point with the first trajectory. The second trajectory can then be calculated back from the mark position, or form the second position, e.g. when the mark position and second position are adjacent positions, to the first position, e.g. through a co-ordinate transformation. This allows for accurately reconstructing the second trajectory and for obtaining an accurate relation between the first and second trajectories useful for determining the calibration offset. The mark position is advantageously a point which is shared between the first and second trajectories, e.g. because the mobile assembly must in any case pass through the mark position to reach the second position. Alternatively, or in addition, either the first data, the second data or both comprise timestamp information related to an execution of the first trajectory or the second trajectory respectively. The timestamp information allows for relating the two trajectories in the mark position. Timestamps between the mobile assembly (second sensor) and the position sensing device can be synchronized in the first position, the second position, the mark position, and/or any other suitable position.

Advantageously, the controller is configured to determine the second trajectory after the mobile assembly has been guided/positioned in the mark position, or in the second position. The second position is advantageously a (final) park position of the mobile assembly, such as a position in registration with the stationary assembly. Such a park position is one allowing for transferring utilities between the mobile assembly and the stationary assembly. By so doing, the two trajectories share a common position, making it easy to determine the calibration offset.

The first position is advantageously a starting position for a guidance of the mobile assembly to the stationary assembly (e.g., the second position). The first position can refer to a position sensed for the first time by the first position sensor for the respective mobile assembly. The first or starting position advantageously corresponds to a most remote position of the mobile assembly that is sensed by the wireless signal of the position sensing device, or the position in which the wireless signal determines a position of the mobile assembly for the first time, e.g. following communication initialization between mobile and stationary assembly. This can be a position in which first contact is made between the mobile assembly and the stationary assembly, e.g., where wireless communication between the mobile and stationary assembly is initiated. The first position advantageously corresponds to a position where a guidance path, i.e. the first trajectory, is determined for the first time.

Advantageously, the controller is configured to collect fourth data representative of an orientation of the mobile assembly relative to the stationary assembly. The controller is configured to determine the orientation in at least one position along the displacement, e.g. in the first position, the second position, the mark position or any other suitable position. The controller can e.g. be configured to determine the second trajectory based on the fourth data. Hence, the controller can be configured to determine the calibration offset based on (e.g., taking into account) the orientation. This improves the accuracy in determining the second trajectory and may lead to faster convergence. The fourth data can be collected by a fourth sensor different from the first, second and third sensors. Alternatively, any one or a combination of the first, second or third sensors can be used for collecting the fourth data.

The controller advantageously implements a machine learning algorithm or an iterative convergence algorithm. Such algorithms are advantageously used for determining or adjusting the calibration offset in an adaptive way, e.g. based on multiple sets of first and second trajectories that have been collected. This ensures a smooth convergence of the adapted first trajectory (adapted by the calibration offset) towards the real trajectory and/or towards accurate relative or absolute positions.

Advantageously, the controller is configured for adapting a subsequent first trajectory by the calibration offset. Based on the calibration offset, the controller can be configured to determine a distortion compensation for the position estimations by the position sensing device. The distortion compensation can be used by the controller when determining subsequent trajectories.

The controller is advantageously implemented in the stationary assembly. Advantageously, either one or both the controller part that implements determining the first trajectory and the controller part that implements determining the second trajectory are located in the stationary assembly.

The stationary assembly can refer to a ground assembly for wireless power transfer, or a docking station for wired power transfer. The mobile assembly can refer to any vehicle comprising a battery that requires charging through an external source, e.g. a battery operated vehicle, an automated guided vehicle, etc.

According to a second aspect of the invention, there is provided a method for positioning a mobile assembly relative to a stationary assembly, as set out in the appended claims. Methods according to the invention comprise a step of determining a first trajectory for positioning the mobile assembly at a second position proximate to the stationary assembly, e.g. from a first position remote from the stationary assembly, based on a wireless signal sensing a relative position between the mobile assembly and the stationary assembly. The wireless signal can be generated by the first position sensor as described above. The mobile assembly is displaced from the first position to the second position based on the first trajectory. Following completion of the displacement, a calibration offset for the first trajectory is determined. The calibration offset is determined based on sensor data other than the wireless signal and collected on or within the mobile assembly during execution of the displacement. The sensor data advantageously refers to the second data collected by the one or more second sensors as described above.

Advantageously, a second trajectory corresponding to the displacement that was executed, in particular from the first position to the second position, is determined based on the sensor data. Advantageously, the calibration offset is determined based on a difference or deviation between the first trajectory and the second trajectory.

Advantageously, the method can comprise registering a mark position of the mobile assembly relative to the stationary assembly, e.g. by collecting third data different from the wireless signal, wherein the mark position is determined based on the third data. In determining the calibration offset, the first trajectory and the second trajectory are made to coincide in the mark position. The mark position can be, though need not be, the second position. Advantageously, timestamp information is collected corresponding to at least a portion, or all of: the first data, the second data, or both. The timestamp information facilitates making the first and second trajectories coincide in the mark position.

Advantageously, methods according to aspects of the invention comprise collecting fourth data representative of an orientation of the mobile assembly relative to the stationary assembly. The second trajectory is advantageously determined taking the fourth data into account. The calibration offset can hence be determined based on the fourth data. The fourth data can be different from any one or all of the wireless signal, the second data, the third data.

Advantageously, the calibration offset is determined by feeding the first trajectory and the second trajectory to a machine learning algorithm or an iterative convergence algorithm. By way of example, for a first trajectory Tᵢ a respective calibration offset COᵢ is determined. The calibration offset COᵢ is used for correcting/adapting a subsequent first trajectory Tᵢ₊₁.

Advantageously, methods according to the invention reflect implementations of the controller of the system described above. Alternatively, the system as described above is made to execute the method steps as described herein.

### Brief description of the figures

Aspects of the invention will now be described in more detail with reference to the appended drawings, wherein same reference numerals illustrate same features and wherein:
Figure 1 represents a first trajectory for guiding a mobile assembly from a first position remote from the stationary assembly to a second position proximate to the stationary assembly;
Figure 2 represents schematically the mobile assembly and the stationary assembly including components mounted thereon;
Figure 3 represents the first trajectory of Fig. 1 being an estimated trajectory and the actual executed trajectory as determined from sensor data collected on the mobile assembly;
Figure 4 represents a flow diagram of the method for positioning the mobile assembly relative to the stationary assembly according to the present invention.

### Description of embodiments

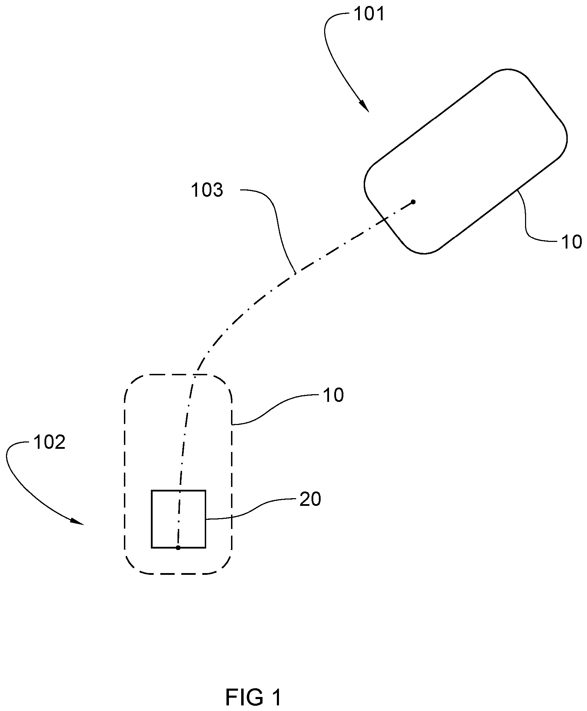

Referring to Fig. 1, when a mobile assembly 10, such as an electric vehicle, needs to be positioned in registration with a stationary assembly 20, it generally has to perform an approach manoeuvre from a current position 101 to a final parking position 102. A trajectory 103 needs to be executed by the mobile assembly 10 from the current position 101 in order to arrive at the final parking position 102. The stationary assembly can be an assembly allowing for transferring various types of utilities between the mobile assembly 10 and the stationary assembly 20, such as though not limited to a transfer of electric energy, which can be through a wireless interface (e.g. inductive power transfer), or through a wired connection. The transfer of utilities can e.g. also relate to the automated loading or unloading of goods to and from the mobile assembly.

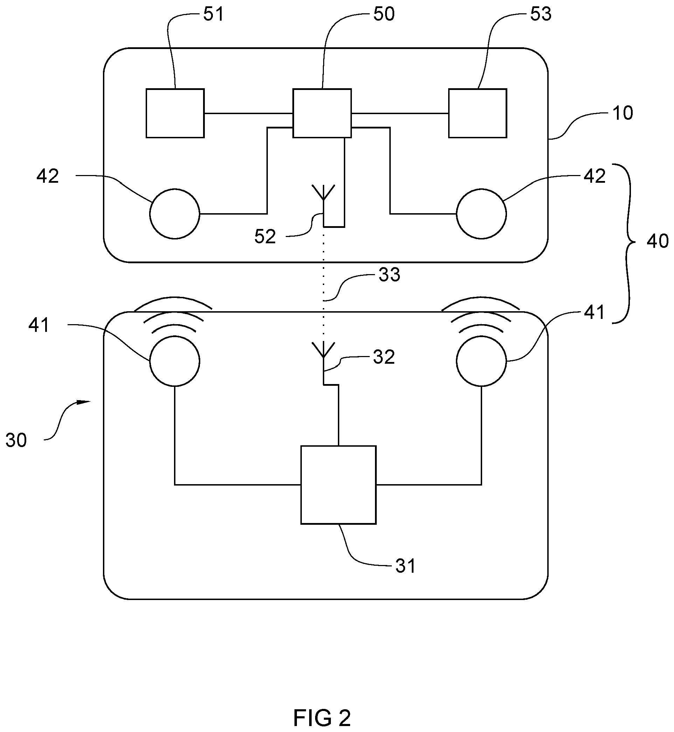

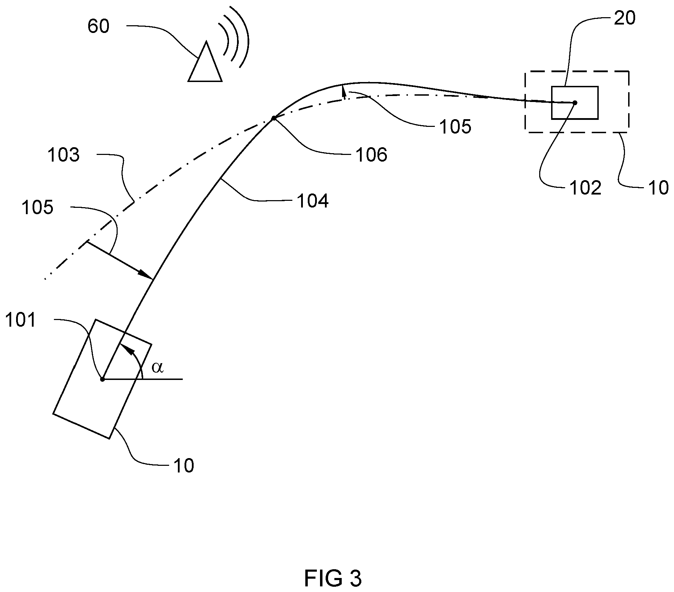

Referring to Figs. 2 and 3, a positioning system 30 comprises a control unit 31 and a position sensing system 40 coupled thereto. The position sensing system 40 comprises position sensors, such as transmitters 41 and receivers 42 which are configured to sense a position of the mobile assembly 10 relative to the stationary assembly 20. The position information sensed by the position sensing system 40 is fed to the control unit 31 which is configured to calculate and possibly track/monitor the trajectory 103. By way of example, transmitters 41 are provided on the stationary assembly 20 while the receivers 42 are provided on the mobile assembly, or vice versa. Transmitters 41 and/or receivers 42 can instead be transceivers configured to both emit and receive a wireless signal. The position sensing system 40 is configured to sense a position based on a wireless signal. Any suitable type of wireless signal can be used for this purpose, such as ultrasound or acoustic signals, radio waves, magnetic fields, etc. It will be convenient to note that the position sensing system 40 may not require to have position sensors on both the mobile and the stationary assemblies. By way of example, position sensors can be provided on only one of the mobile and stationary assemblies.

In one example, the control unit 31 is provided on the stationary assembly 20, although this is not a requirement and it may well be possible to provide the control unit 31 on the mobile assembly 10. The trajectory 103 determined by the control unit 31 is transmitted wirelessly to the mobile assembly 10, e.g. through a wireless communication interface 33 including communicating antennas 32, 52, through which the trajectory 103 is communicated to a control unit 50 on the mobile assembly. Control unit 50 may be configured to supply driving or guidance instructions to the mobile assembly 10, or to an operator driving the mobile assembly, based on the trajectory 103. It will be convenient to note that, alternatively, the trajectory 103 can be calculated in control unit 50 based on position data fed from the position sensors (e.g. receivers 42) to the control unit 50.

The signal from the position sensors of position sensing system 40 can be distorted by the environment. For example, when a positioning sensing system is used based on magnetic fields, magnetic or electric conducting materials in the vicinity can dampen or reflect the magnetic fields. In case of a system based on ultra-sound, reflection of sound from nearby objects can distort the received signals. As a result, the positioning sensing system, calibrated in a laboratory environment, provides position information that deviates from the real position in the installed environment.

According to the present invention, the accuracy of the position calculation is improved by calibration of the environment and compensation of the calculated position based on this calibration. The present invention uses sensor data of a secondary system provided on the mobile assembly 10, which describes (part of) the executed relative trajectory, to calibrate or adjust the trajectory 103 determined by the control unit 31.

To this end, the mobile assembly 10 is equipped with sensors 51, 53, such as accelerometers, (rotational) speed sensors, gyroscopes, wheel encoders or other sensing systems that are used for park assist, park distance control or autonomous driving, etc., which are typically present on mobile assemblies, such as vehicles. Sensors 51, 53 are coupled to the control unit 50 which may process data received from these sensors to determine an executed trajectory 104 which may deviate from the calculated trajectory 103 (see Fig. 3), e.g. because the environment causes distortion to the position data sensed by the position sensing system 40.

The sensors 51, 53 are advantageously used in the present invention as a secondary position sensing system to determine a second trajectory 104 relating to the path that is actually executed by the mobile assembly 10. This trajectory 104 data is then used to correct or calibrate the calculated trajectory 103 following completion of the displacement of the mobile assembly to the final park position 102.

In one aspect, since the second trajectory 104 is determined based on sensors located on the mobile assembly 10, a relative trajectory is obtained. To determine an error between the actually executed trajectory 104 and the calculated trajectory 103, both trajectories are advantageously brought in registration in a mark position 106. The mark position advantageously refers to a position where the positioning system 30 can obtain an accurate position information which is not affected by the environment. The mark position 106 can e.g. be determined by a beacon 60 which does not form part of the position sensing system 40 and/or the sensors 51, 53. The mark position 106 can be selected to be a location where the distance between the mobile assembly 10 and the stationary assembly 20 is very small, e.g. when the mobile assembly 10 is in registration with the stationary assembly 20, e.g. the mark position 106 can coincide with, or be adjacent to parking position 102 though this need not be the case, as e.g. shown in Fig. 3.

Advantageously, an orientation α of the mobile assembly 10 is determined along the executed path. The orientation is determined in at least one position along the first trajectory 103, the second trajectory 104 or both, and can be used to improve determination of the respective trajectory relative to the stationary assembly 20. The orientation α can be determined through data gathered by any one of the position sensing system 40, the sensors 51, 53 or any other (additional) sensor.

Control unit 50 is advantageously configured to communicate data representative of the executed trajectory 104 only after the mobile assembly 10 has arrived at final position 102. The positioning system 30 can derive a calibration offset 105 based on the calculated/estimated trajectory 103 and the executed trajectory 104, as determined by data collected by sensors 51, 53. Because the stationary assembly 20 is typically fixed at a position in a garage or on a driveway, the calibration offset 105 can be improved over time when the mobile assembly 10 parks multiple times at position 102, and/or from calibration offsets determined from multiple mobile assemblies. This will incrementally take (fixed) environment influences into account. Preferably, the control unit 31 can be implemented with an iterative convergence algorithm or a machine learning algorithm that is used to gradually adjust and improve the calculation of trajectory 103 based on the calibration offset 105. A gradual convergence algorithm is preferred in order to restrict the influence of outliers in the position estimation of both the first as well as the second positioning system. In other words, this prevents large deviations between subsequent position estimations.

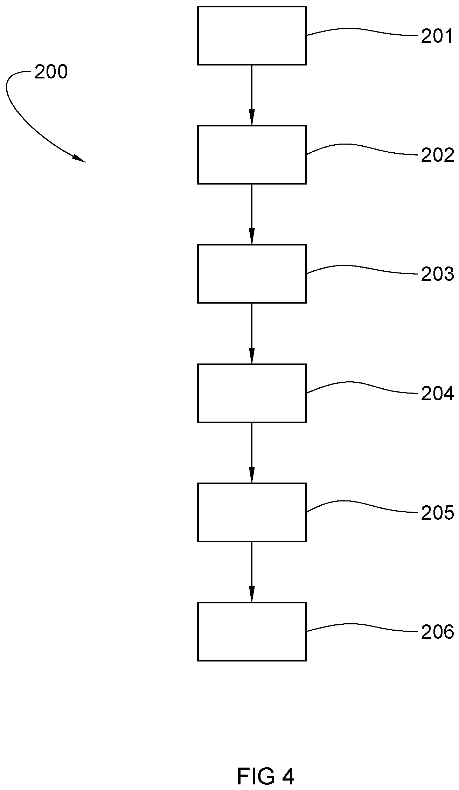

Referring to Fig. 4, a method 200 of positioning the mobile assembly 10 according to the invention can comprise the following steps, which are advantageously performed sequentially. In a first, optional step 201, the mobile assembly 10 located at position 101 starts an initialising communication with the stationary assembly 20, e.g. to establish a communication link. By way of example, it can inform the stationary assembly 20 that it wishes to execute a parking manoeuvre to enter into registration with the stationary assembly 20 at position 102. This information may be communicated by control unit 50 to control unit 31 through the wireless communication interface 33. In this step, time information may be synchronised between the mobile and stationary assemblies.

In step 202, the first trajectory 103 is determined. Control unit 31 can activate the position sensing system 40 to determine the position 101 at which the mobile assembly is positioned. From that position, control unit 31 determines a first trajectory 103 which the mobile assembly 10 should follow to arrive at final parking position 102. Trajectory 103 is communicated to control unit 50 on the mobile assembly 10. Control unit can additionally determine an orientation of the mobile assembly 10 in position 101, e.g. by means of position sensing system 40 and use the orientation in determining trajectory 103.

In step 203, the mobile assembly 10 is displaced from position 101 to position 102. The control unit 50 can guide the mobile assembly 10, either through autonomous driving or operated-assisted driving to execute the first trajectory 103. The position sensing system 40 may continuously guide the mobile assembly, by updating the position of the mobile assembly 10 and adapting the first trajectory 103 accordingly. While executing the first trajectory 103, control unit 50 collects data relating to the actual executed trajectory, e.g. from sensors 51, 53.

In step 204, a mark position 106 is determined along the actual executed path, e.g. by beacon 60. By way of example, a timestamp at which the mobile assembly 10 passes through mark position 106 is determined, and mark position 106 can refer to a known position relative to the stationary assembly 20 (second position 102). Additionally, or alternatively, an orientation α of the mobile assembly 10 is determined along the path. Mark position 106 and/or orientation α is fed to control unit 31.

In step 205, the mobile assembly 10 reaches the final parking position 102 and the first trajectory 103 is completed. Control unit 50 may communicate the collected trajectory data received from sensors 51, 53 to the control unit 31. Alternatively, the data from sensors 51, 53 may be communicated to the control unit 31 during execution of the first trajectory 103.

In step 206, control unit 31 determines a calibration offset 105. Either control unit 50, or control unit 31 can determine a second trajectory 104 which is representative of the path actually executed by the mobile assembly 10. The data collected from sensors 51, 53, and optionally the orientation α is used for determining the second trajectory 104. Second trajectory 104 includes position 102, e.g. as end point of the trajectory and can include mark position 106 which may or may not overlap with position 102. Advantageously, no data from position sensing system 40 is used to determine the second trajectory 104. Control unit 31 can compare the second trajectory 104 to the first trajectory 103 of the position sensing system 40 to derive the calibration offset.

A difference between the first trajectory 103 and the second trajectory 104 can be determined once the mobile assembly has arrived at the final parking position 102. The first trajectory 103 and the second trajectory 104 are advantageously made to coincide in the mark position 106, and a deviation between the two can easily be determined. By way of example, the first trajectory 103 and the second trajectory **104** are brought in registration in the mark position 106. As the time at which the mobile assembly 10 reached the mark position 106 is known, the entire second trajectory **104** can be related to the first trajectory 103. Depending on the accuracy of the position estimation of the first trajectory, the positioning estimation of the position sensing system **40** can be updated (re-calibrated) using machine learning techniques, or iterative convergence algorithms, with the purpose of improving subsequent positioning estimations and/or trajectory determination of the position sensing system 40.

## Claims

1. System (30) for positioning a mobile assembly (10) relative to a stationary assembly (20), comprising:
a first position sensing device (40) configured for sensing first data representative of a relative position between the mobile assembly (10) and the stationary assembly (20) based on a wireless signal,
a controller (31) configured for determining a first trajectory (103) from a first position (101) remote from the stationary assembly to a second position (102) proximate to the stationary assembly based on the first data, and
at least one sensor (51, 53) attached to the mobile assembly (10) and arranged for collecting second data representative of a displacement executed by the mobile assembly,
wherein the controller (31) is configured for determining a calibration offset (105) for the first trajectory (103) based on the second data following completion of the displacement of the mobile assembly from the first position (101) to the second position (102) along the first trajectory (103) and wherein the controller is configured for iteratively improving the calibration offset following completion of subsequent displacements of the mobile assembly from a third position remote from the stationary assembly to a fourth position proximate to the stationary assembly along subsequent first trajectories, wherein the first position sensing device (40) is configured to emit the wireless signal, wherein the wireless signal comprises an electromagnetic signal, an ultrasound signal or an acoustic signal for sensing the first data, preferably wherein the fourth position coincides with the second position.

2. System of claim 1, wherein the controller is further configured for determining a compensated first trajectory based on the first trajectory and the calibration offset, preferably wherein the controller is configured for guiding the mobile assembly (10) from the first position (101) to the second position (102) based on the compensated first trajectory.

3. System of claim 1 or 2, wherein the controller is configured to determine a second trajectory (104) representative of the displacement executed by the mobile assembly based on the second data, the controller being configured for determining the calibration offset (105) based on a difference between the first trajectory (103) and the second trajectory (104), preferably comprising means for registering a mark position of the mobile assembly relative to the stationary assembly along the displacement, wherein the controller (31) is configured to determine the calibration offset by making the first trajectory (103) and the second trajectory (104) coincide in the mark position, preferably wherein the means for registering the mark position comprises a third sensor configured to collect third data representative of the mark position, the third sensor being different from the position sensing device, preferably wherein the second position is the mark position.

4. System of any one of the preceding claims, wherein the second position (102) is a parking position of the mobile assembly (10), preferably wherein the second position allows for transferring utilities between the mobile assembly and the stationary assembly (20), preferably wherein the transfer of utilities comprises a transfer of electrical energy.

5. System of any one of the preceding claims, wherein the calibration offset comprises environmental distortion data, for instance a map relating to an environment of the stationary assembly.

6. System of any one of the preceding claims, wherein the system is configured to collect fourth data representative of an orientation of the mobile assembly relative to the stationary assembly, wherein the controller is configured to determine the orientation in at least one position along the displacement, and to determine the calibration offset based on the orientation.

7. System of any one of the preceding claims, wherein sensing first data based on the wireless signal comprises measuring a parameter of the wireless signal representative of the relative position.

8. Method (200) for positioning a mobile assembly (10) relative to a stationary assembly (20) comprising the steps of:
generating a wireless signal by a position sensing device, wherein the wireless signal is one of an electromagnetic signal, an ultrasound signal and an acoustic signal,
determining a first trajectory (103) for positioning the mobile assembly (10) from a first position (101) remote from the stationary assembly to a second position (102) proximate to the stationary assembly (20) by sensing a relative position between the mobile assembly and the stationary assembly based on the wireless signal,
executing a displacement of the mobile assembly from the first position (101) to the second position (102) based on the first trajectory (103),
following completion of executing the displacement, determining a calibration offset (105) for the first trajectory (103) based on sensor data collected on the mobile assembly (10) during execution of the displacement, the sensor data being other than the wireless signal
iteratively improving the calibration offset following completion of execution of subsequent displacements of the mobile assembly from a third position remote from the stationary assembly to a fourth position proximate to the stationary assembly along subsequent first trajectories, preferably wherein the fourth position and the second position coincide.

9. Method of claim 8, wherein a compensated first trajectory is determined based on a subsequent first trajectory from the third position to the fourth position and the calibration offset and wherein executing a subsequent displacement from the third position to the fourth position is based on the compensated first trajectory.

10. Method of claim 8 or 9, wherein each displacement is executed by guiding the mobile assembly.

11. Method of any one of claims 8 to 10, comprising determining a second trajectory (104) representative of the displacement executed by the mobile assembly based on the sensor data, wherein determining the calibration offset comprises evaluating a difference between the first trajectory (103) and the second trajectory (104), preferably comprising registering a mark position of the mobile assembly relative to the stationary assembly along the displacement, wherein determining the calibration offset (105) comprises making the second trajectory coincide with the first trajectory (103) in the mark position, preferably comprising collecting third data different from the wireless signal, and using the third data for registering the mark position, preferably wherein the mark position is the second position.

12. Method of any one of the claims 9 to 11, comprising collecting fourth data representative of an orientation of the mobile assembly relative to the stationary assembly, and determining the calibration offset based on the fourth data, preferably comprising determining a second trajectory (104) representative of the displacement executed by the mobile assembly based on the sensor data, wherein determining the calibration offset comprises evaluating a difference between the first trajectory (103) and the second trajectory (104), and determining the second trajectory based on the fourth data.

13. Method of any one of the claims 8 to 12, wherein the calibration offset comprises environmental distortion data, for instance a map relating to an environment of the stationary assembly.

14. Method of any one of claims 8 to 13, wherein sensing the relative position comprises measuring a parameter of the wireless signal.

15. Control unit implementing the method of any one of the claims 8 to 14.

## Patentansprüche

1. System (30) zum Positionieren einer beweglichen Anordnung (10) relativ zu einer stationären Anordnung (20), umfassend:
eine erste Positionserfassungsvorrichtung (40), die zum Erfassen erster Daten, die für eine relative Position zwischen der beweglichen Anordnung (10) und der stationären Anordnung (20) repräsentativ sind, basierend auf einem drahtlosen Signal konfiguriert ist,
eine Steuerung (31), die zum Bestimmen einer ersten Trajektorie (103) von einer ersten Position (101) entfernt von der stationären Anordnung zu einer zweiten Position (102) nahe der stationären Anordnung basierend auf den ersten Daten konfiguriert ist, und
mindestens einen Sensor (51, 53), der an der beweglichen Anordnung (10) angebracht und zum Sammeln zweiter Daten, die für eine durch die bewegliche Anordnung ausgeführte Verschiebung repräsentativ sind, eingerichtet ist,
wobei die Steuerung (31) zum Bestimmen eines Kalibrierungsversatzes (105) für die erste Trajektorie (103) basierend auf den zweiten Daten nach Abschluss der Verschiebung der beweglichen Anordnung von der ersten Position (101) zu der zweiten Position (102) entlang der ersten Trajektorie (103) konfiguriert ist und wobei die Steuerung zum iterativen Verbessern des Kalibrierungsversatzes nach Abschluss anschließender Verschiebungen der beweglichen Anordnung von einer dritten Position entfernt von der stationären Anordnung zu einer vierten Position nahe der stationären Anordnung entlang anschließender erster Trajektorien konfiguriert ist, wobei die erste Positionserfassungsvorrichtung (40) konfiguriert ist, um das drahtlose Signal abzugeben, wobei das drahtlose Signal ein elektromagnetisches Signal, ein Ultraschallsignal oder ein akustisches Signal zum Erfassen der ersten Daten umfasst, wobei die vierte Position vorzugsweise mit der zweiten Position zusammenfällt.

2. System nach Anspruch 1, wobei die Steuerung ferner zum Bestimmen einer kompensierten ersten Trajektorie basierend auf der ersten Trajektorie und dem Kalibrierungsversatz konfiguriert ist, wobei die Steuerung vorzugsweise zum Führen der beweglichen Anordnung (10) von der ersten Position (101) zu der zweiten Position (102) basierend auf der kompensierten ersten Trajektorie konfiguriert ist.

3. System nach Anspruch 1 oder 2, wobei die Steuerung konfiguriert ist, um eine zweite Trajektorie (104), die für die durch die bewegliche Anordnung ausgeführte Verschiebung repräsentativ ist, basierend auf den zweiten Daten zu bestimmen, wobei die Steuerung zum Bestimmen des Kalibrierungsversatzes (105) basierend auf einem Unterschied zwischen der ersten Trajektorie (103) und der zweiten Trajektorie (104) konfiguriert ist, vorzugsweise umfassend ein Mittel zum Registrieren einer Markierungsposition der beweglichen Anordnung relativ zu der stationären Anordnung entlang der Verschiebung, wobei die Steuerung (31) konfiguriert ist, um den Kalibrierungsversatz durch Zusammenfallenlassen der ersten Trajektorie (103) und der zweiten Trajektorie (104) in der Markierungsposition zu bestimmen, wobei das Mittel zum Registrieren der Markierungsposition vorzugsweise einen dritten Sensor umfasst, der konfiguriert ist, um dritte Daten zu sammeln, die für die Markierungsposition repräsentativ sind, wobei sich der dritte Sensor von der Positionserfassungsvorrichtung unterscheidet, wobei die zweite Position vorzugsweise die Markierungsposition ist.

4. System nach einem der vorstehenden Ansprüche, wobei die zweite Position (102) eine Parkposition der beweglichen Anordnung (10) ist, wobei die zweite Position vorzugsweise ein Übertragen von Versorgungsleistungen zwischen der beweglichen Anordnung und der stationären Anordnung (20) ermöglicht, wobei die Übertragung von Versorgungsleistungen vorzugsweise eine Übertragung von elektrischer Energie umfasst.

5. System nach einem der vorstehenden Ansprüche, wobei der Kalibrierungsversatz Umgebungsverzerrungsdaten umfasst, beispielsweise eine Karte, die sich auf eine Umgebung der stationären Anordnung bezieht.

6. System nach einem der vorstehenden Ansprüche, wobei das System konfiguriert ist, um vierte Daten zu sammeln, die für eine Ausrichtung der beweglichen Anordnung relativ zu der stationären Anordnung repräsentativ sind, wobei die Steuerung konfiguriert ist, um die Ausrichtung in mindestens einer Position entlang der Verschiebung zu bestimmen und um den Kalibrierungsversatz basierend auf der Ausrichtung zu bestimmen.

7. System nach einem der vorstehenden Ansprüche, wobei das Erfassen erster Daten basierend auf dem drahtlosen Signal ein Messen eines Parameters des drahtlosen Signals, der für die relative Position repräsentativ ist, umfasst.

8. Verfahren (200) zum Positionieren einer beweglichen Anordnung (10) relativ zu einer stationären Anordnung (20), umfassend die Schritte:
Erzeugen eines drahtlosen Signals durch eine Positionserfassungsvorrichtung, wobei das drahtlose Signal eines von einem elektromagnetischen Signal, einem Ultraschallsignal und einem akustischen Signal ist,
Bestimmen einer ersten Trajektorie (103) zum Positionieren der beweglichen Anordnung (10) von einer ersten Position (101) entfernt von der stationären Anordnung zu einer zweiten Position (102) nahe der stationären Anordnung (20) durch Erfassen einer relativen Position zwischen der beweglichen Anordnung und der stationären Anordnung basierend auf dem drahtlosen Signal,
Ausführen einer Verschiebung der beweglichen Anordnung von der ersten Position (101) zu der zweiten Position (102) basierend auf der ersten Trajektorie (103),
nach Abschluss des Ausführens der Verschiebung, Bestimmen eines Kalibrierungsversatzes (105) für die erste Trajektorie (103) basierend auf Sensordaten, die an der beweglichen Anordnung (10) während einer Ausführung der Verschiebung gesammelt werden, wobei die Sensordaten von dem drahtlosen Signal verschieden sind,
iteratives Verbessern des Kalibrierungsversatzes nach Abschluss der Ausführung anschließender Verschiebungen der beweglichen Anordnung von einer dritten Position entfernt von der stationären Anordnung zu einer vierten Position nahe der stationären Anordnung entlang anschließender erster Trajektorien, wobei die vierte Position und die zweite Position vorzugsweise zusammenfallen.

9. Verfahren nach Anspruch 8, wobei eine kompensierte erste Trajektorie basierend auf einer anschließenden ersten Trajektorie von der dritten Position zu der vierten Position und dem Kalibrierungsversatz bestimmt wird und wobei das Ausführen einer anschließenden Verschiebung von der dritten Position zu der vierten Position auf der kompensierten ersten Trajektorie basiert.

10. Verfahren nach Anspruch 8 oder 9, wobei jede Verschiebung durch Führen der beweglichen Anordnung ausgeführt wird.

11. Verfahren nach einem der Ansprüche 8 bis 10, umfassend das Bestimmen einer zweiten Trajektorie (104), die für die durch die bewegliche Anordnung ausgeführte Verschiebung repräsentativ ist, basierend auf den Sensordaten, wobei das Bestimmen des Kalibrierungsversatzes ein Auswerten eines Unterschieds zwischen der ersten Trajektorie (103) und der zweiten Trajektorie (104) umfasst, vorzugsweise umfassend das Registrieren einer Markierungsposition der beweglichen Anordnung relativ zu der stationären Anordnung entlang der Verschiebung, wobei das Bestimmen des Kalibrierungsversatzes (105) das Zusammenfallenlassen der zweiten Trajektorie mit der ersten Trajektorie (103) in der Markierungsposition umfasst, vorzugsweise umfassend das Sammeln von dritten Daten, die sich von dem drahtlosen Signal unterscheiden, und ein Verwenden der dritten Daten zum Registrieren der Markierungsposition, wobei die Markierungsposition vorzugsweise die zweite Position ist.

12. Verfahren nach einem der Ansprüche 9 bis 11, umfassend das Sammeln von vierten Daten, die für eine Ausrichtung der beweglichen Anordnung relativ zu der stationären Anordnung repräsentativ sind, und das Bestimmen des Kalibrierungsversatzes basierend auf den vierten Daten, vorzugsweise umfassend das Bestimmen einer zweiten Trajektorie (104), die für die durch die bewegliche Anordnung ausgeführte Verschiebung repräsentativ ist, basierend auf den Sensordaten, wobei das Bestimmen des Kalibrierungsversatzes das Auswerten eines Unterschieds zwischen der ersten Trajektorie (103) und der zweiten Trajektorie (104) und das Bestimmen der zweiten Trajektorie basierend auf den vierten Daten umfasst.

13. Verfahren nach einem der Ansprüche 8 bis 12, wobei der Kalibrierungsversatz Umgebungsverzerrungsdaten umfasst, beispielsweise eine Karte, die sich auf eine Umgebung der stationären Anordnung bezieht.

14. Verfahren nach einem der Ansprüche 8 bis 13, wobei das Erfassen der relativen Position das Messen eines Parameters des drahtlosen Signals umfasst.

15. Steuereinheit, die das Verfahren nach einem der Ansprüche 8 bis 14 implementiert.

## Revendications

1. Système (30) permettant de positionner un ensemble mobile (10) par rapport à un ensemble fixe (20), comprenant :
un premier dispositif de détection de position (40) configuré pour détecter des premières données représentant une position relative entre **l'ensemble** mobile (10) et **l'ensemble** fixe (20) sur la base d'un signal sans fil,
un dispositif de commande (31) configuré pour déterminer une première trajectoire (103) d'une première position (101) éloignée de l'ensemble fixe vers une deuxième position (102) proche de l'ensemble fixe sur la base des premières données, et
au moins un capteur (51, 53) fixé à l'ensemble mobile (10) et agencé pour collecter des deuxièmes données représentant un déplacement exécuté par l'ensemble mobile,
dans lequel le dispositif de commande (31) est configuré pour déterminer un décalage d'étalonnage (105) pour la première trajectoire (103) sur la base des deuxièmes données après l'achèvement du déplacement de l'ensemble mobile de la première position (101) vers la deuxième position (102) le long de la première trajectoire (103), et dans lequel le dispositif de commande est configuré pour améliorer de manière itérative le décalage d'étalonnage après l'achèvement des déplacements ultérieurs de l'ensemble mobile à partir d'une troisième position éloignée de **l'ensemble** fixe vers une quatrième position à proximité de **l'ensemble** fixe le long de premières trajectoires ultérieures, dans lequel le premier dispositif de détection de position (40) est configuré pour émettre le signal sans fil, dans lequel le signal sans fil comprend un signal électromagnétique, un signal ultrasonore ou un signal acoustique pour détecter les premières données, de préférence dans lequel la quatrième position coïncide avec la deuxième position.

2. Système selon la revendication 1, dans lequel le dispositif de commande est en outre configuré pour déterminer une première trajectoire compensée sur la base de la première trajectoire et du décalage d'étalonnage, de préférence dans lequel le dispositif de commande est configuré pour guider l'ensemble mobile (10) de la première position (101) vers la deuxième position (102) sur la base de la première trajectoire compensée.

3. Système selon la revendication 1 ou 2, dans lequel le dispositif de commande est configuré pour déterminer une seconde trajectoire (104) représentant le déplacement exécuté par **l'ensemble** mobile sur la base des secondes données, le dispositif de commande étant configuré pour déterminer le décalage d'étalonnage (105) sur la base d'une différence entre la première trajectoire (103) et la seconde trajectoire (104), comprenant de préférence un moyen pour enregistrer une position de repère de l'ensemble mobile par rapport à l'ensemble fixe le long du déplacement, dans lequel le dispositif de commande (31) est configuré pour déterminer le décalage d'étalonnage en faisant coïncider la première trajectoire (103) et la seconde trajectoire (104) dans la position de repère, de préférence dans lequel le moyen d'enregistrement de la position de repère comprend un troisième capteur configuré pour collecter des troisièmes données représentant la position de repère, le troisième capteur étant différent du dispositif de détection de position, de préférence dans lequel la deuxième position est la position de repère.

4. Système selon l'une quelconque des revendications précédentes, dans lequel la deuxième position (102) est une position de stationnement de l'ensemble mobile (10), de préférence dans lequel la deuxième position permet le transfert de services publics entre l'ensemble mobile et l'ensemble fixe (20), de préférence dans lequel le transfert de services publics comprend un transfert d'énergie électrique.

5. Système selon l'une quelconque des revendications précédentes, dans lequel le décalage d'étalonnage comprend des données de distorsion environnementale, par exemple une carte relative à un environnement de l'ensemble fixe.

6. Système selon l'une quelconque des revendications précédentes, dans lequel le système est configuré pour collecter des quatrièmes données représentant une orientation de l'ensemble mobile par rapport à l'ensemble fixe, dans lequel le dispositif de commande est configuré pour déterminer l'orientation dans au moins une position le long du déplacement, et pour déterminer le décalage d'étalonnage sur la base de l'orientation.

7. Système selon l'une quelconque des revendications précédentes, dans lequel la détection de premières données sur la base du signal sans fil comprend la mesure d'un paramètre du signal sans fil représentant la position relative.

8. Procédé (200) permettant de positionner un ensemble mobile (10) par rapport à un ensemble fixe (20) comprenant les étapes consistant à :
générer un signal sans fil par un dispositif de détection de position, dans lequel le signal sans fil est l'un parmi un signal électromagnétique, un signal ultrasonore et un signal acoustique,
déterminer une première trajectoire (103) pour positionner l'ensemble mobile (10) d'une première position (101) éloignée de l'ensemble fixe vers une deuxième position (102) à proximité de l'ensemble fixe (20) en détectant une position relative entre l'ensemble mobile et l'ensemble fixe sur la base du signal sans fil,
exécuter un déplacement de l'ensemble mobile de la première position (101) vers la deuxième position (102) sur la base de la première trajectoire (103),
une fois l'exécution du déplacement terminée, déterminer un décalage d'étalonnage (105) pour la première trajectoire (103) sur la base des données de capteur collectées sur l'ensemble mobile (10) pendant l'exécution du déplacement, les données de capteur étant autres que le signal sans fil
l'amélioration itérative du décalage d'étalonnage après l'achèvement de l'exécution des déplacements ultérieurs de l'ensemble mobile d'une troisième position éloignée de l'ensemble fixe à une quatrième position à proximité de l'ensemble fixe le long de premières trajectoires ultérieures, de préférence dans lequel la quatrième position et la deuxième position coïncident.

9. Procédé selon la revendication 8, dans lequel une première trajectoire compensée est déterminée sur la base d'une première trajectoire ultérieure de la troisième position vers la quatrième position et du décalage d'étalonnage, et dans lequel l'exécution d'un déplacement ultérieur de la troisième position vers la quatrième position est basée sur la première trajectoire compensée.

10. Procédé selon la revendication 8 ou 9, dans lequel chaque déplacement est exécuté en guidant l'ensemble mobile.

11. Procédé selon l'une quelconque des revendications 8 à 10, comprenant la détermination d'une seconde trajectoire (104) représentant le déplacement exécuté par l'ensemble mobile sur la base des données capteur, dans lequel la détermination du décalage d'étalonnage comprend l'évaluation d'une différence entre la première trajectoire (103) et la seconde trajectoire (104), comprenant de préférence l'enregistrement d'une position de repère de l'ensemble mobile par rapport à l'ensemble stationnaire le long du déplacement, dans lequel la détermination du décalage d'étalonnage (105) comprend le fait de faire coïncider la seconde trajectoire avec la première trajectoire (103) dans la position de repère, comprenant de préférence la collecte de troisièmes données différentes du signal sans fil, et l'utilisation des troisièmes données pour enregistrer la position de repère, de préférence dans lequel la position de repère est la deuxième position.

12. Procédé selon l'une quelconque des revendications 9 à 11, comprenant la collecte de quatrièmes données représentant une orientation de l'ensemble mobile par rapport à l'ensemble fixe, et la détermination du décalage d'étalonnage sur la base des quatrièmes données, comprenant de préférence la détermination d'une seconde trajectoire (104) représentant le déplacement exécuté par l'ensemble mobile sur la base des données capteur, dans lequel la détermination du décalage d'étalonnage comprend l'évaluation d'une différence entre la première trajectoire (103) et la seconde trajectoire (104), et la détermination de la seconde trajectoire sur la base des quatrièmes données.

13. Procédé selon l'une quelconque des revendications 8 à 12, dans lequel le décalage d'étalonnage comprend des données de distorsion environnementale, par exemple une carte relative à un environnement de l'ensemble fixe.

14. Procédé selon l'une quelconque des revendications 8 à 13, dans lequel la détection de la position relative comprend la mesure d'un paramètre du signal sans fil.

15. Unité de commande mettant en œuvre le procédé selon l'une quelconque des revendications 8 à 14.
